# EUROPEAN PATENT APPLICATION

(11) **EP 1 550 504 A1**
(43) Date of publication of application: **06.07.2005**
(21) Application number: 03797581.0
(22) Date of filing: 11.09.2003
(51) Int. Cl.: B01J 19/00, B82B 3/00

(54) **THIN FILM AND METHOD FOR MANUFACTURING SAME**

(30) Priority: 12.09.2002 JP 2002307663
(71) Applicant: Kyoto Instruments Co., Ltd., Kyoto-shi, Kyoto 606-8182 (JP)
(72) Inventor: KIMURA, Kuniko Kyoto University, Kyoto-shi, Kyoto 606-8501 (JP); KOBAYASHI, Kei Kyoto University, Kyoto-shi, Kyoto 606-8501 (JP); YAMADA, Hirofumi Kyoto University, Kyoto-shi, Kyoto 606-8501 (JP); HORIUCHI, Toshihisa Kyoto University, Kyoto-shi, Kyoto 606-8501 (JP); ISHIDA, Kenji Kyoto University, Kyoto-shi, Kyoto 606-8501 (JP); MATSUSHIGE, Kazumi Kyoto University, Kyoto-shi, Kyoto 606-8501 (JP)
(74) Representative: Bentz, Jean-Paul
(86) International application number: PCT/JP2003/011670
(87) International publication number: WO 2004/026459

(57) **Abstract**

A totally new method for manufacturing a thin film wherein only an arbitrary small region is structurally controlled. The structure of a film is controlled by applying a force to the entire film or an arbitrary region of the film using a part having a sharp tip during the film-forming process or after finishing the film formation. At this time, the temperature of the film is set at the glass transition point of the amorphous region or higher. An atomic force microscope can be used as an apparatus for realizing this manufacturing method.

## Description

### TECHNICAL FIELD

The present invention relates to a thin film manufacturing method, in which a structure of a thin film is controlled, used to provide functional parts and components used in fields in which high-density and high-integration are required, as in memories and small electronic devices such as a portable phone. The invention also relates to a thin film manufactured by controlling a structure.

### BACKGROUND ART

There has been increasing demand for high-density and high-integration particularly in the areas of small electronic devices, specifically in the fields of memory including semiconductor memory and optical memory, and portable phone. In semiconductor memory, the processing size in the chip has been approaching the processing limit of a photolithography technique. Accordingly, instead of the photolithography technique, there is a need for a new processing technique that is more precise and more accurate. Increased precision of the components of memory devices inevitably requires a corresponding level of integration for the peripheral devices such as a driving unit or a read/write head, as well as parts and components of these devices. With further advancement toward more precision, it will be even more difficult to follow the conventional procedure in which a large-area functional sheet or block is cut into individual pieces to be processed and mounted on parts.

As a replacement of these techniques, there has been proposed a technique in which an arbitrary minute area of a large-area sheet or block is processed to construct a new structure. The technique allows a required function to be obtained only in a region where it is required. The present invention relates to such a technique whereby a structure required for high-density and high-integration is formed in a controlled manner for a required function in an arbitrary minute position of a very thin film.

In recent years, many types of functional thin films have been developed using inorganic and organic materials, and many of these films have been put to actual application. Examples of organic materials used for this purpose include: polymer or low-molecular-weight films having optical anisotropy; liquid crystal polymer films, liquid crystal oligomer films, or composite films of a low-molecular-weight liquid crystal and a polymer having dielectric or optical anisotropy; and ferroelectric polymer films. As inorganic materials, conductive or ferroelectric metal oxide thin films have been developed. In organic materials, many of these functional thin films are produced by a method known as a wet deposition method, in which a solution is spread over a substrate using an applicator such as a spinner, bar coater, or slit die, and the solvent is evaporated. A dry deposition method in which a thin film is directly vapor-deposited or sputtered on a substrate is also used. For inorganic materials, a sol-gel method is widely used, in addition to the vapor deposition method. Generally, the thin film becomes functional or its function is improved when the structure of the thin film is controlled during or after the deposition process.

In one common method of controlling a structure of the thin film, a film is deposited on a substrate having a micro structure on its surface, and the resulting film structure is epitaxially controlled. In another method, a micro structure of the film is controlled by mechanically applying a force on the film. The most common example of the first method is the orientation process for low-molecular-weight liquid crystal films. In this process, a liquid crystal film is formed on a substrate having non-flat structures of, for example, micro grooves on its surface, so that the liquid crystal molecules are oriented along the groove structure. A well-known process of the second method is stretching applied to polymer films. In this technique, a polymer film is stretched about two to five times the original by mechanically applying a force in a single direction or two different directions of the film, so as to align the molecular chains along the directions of applied force. With aligning the directions of molecular chains by the stretching process, crystallinity of the film is improved. Further, the crystal size becomes bigger, and orientation of crystals in the film can be aligned by this process.

By controlling directions of molecules or microcrystals in the film using the foregoing methods, the following functions can be rendered. First, when molecules anisotropic with respect to refractive index are oriented along one direction, a film with refractive index anisotropy can be obtained. Further, by orienting the molecules along precisely controlled directions at each position of the film, an optical phase shift film can be obtained that can precisely control a wavefront of light. Such an optical phase shift film is necessary in the field of display to provide a phase shift filter for expanding the viewing angle. Further, the optical phase shift film is highly useful as a filter used for optical communications or optical processing unit.

Mechanical properties of the film can also be controlled by controlling a structure of the film. For example, when molecular chains of a polymer are oriented along one direction, the elastic modulus along the direction of molecular chains becomes larger than that along a direction perpendicular to it. Thus, by aligning the molecular chains by a process like the stretching process, a film with anisotropy in elastic modulus can be obtained. If the film is anistropic with respect to elastic modulus, then the film is also anisotropic with respect to sound velocity. These properties of the film can be utilized to provide various types of functional bodies or surface wave filters.

As described above, controlling a film structure is highly useful in a wide variety of applications. However, all of the foregoing methods are for controlling a structure of bulk materials. For example, the stretching process currently available for a polymer film can only be applied to a film of a thickness exceeding 1000 nm, because the process is strongly influenced by the evenness of film thickness and tensility. Therefore films are broken easily in a case of thin film. As for the structure control using an electric field or magnetic field, while the conventional methods allow a structure of a thin film to be controlled evenly over the film surface, it is difficult to control structures only in minute regions at arbitrary positions within the film plane. Further, in the orientation process for low-molecular-weight liquid crystal, non-flat structures are generally formed evenly over a wide area of the substrate. In some techniques of the orientation process, photolithography is used for forming different non-flat patterns in different regions on the substrate surface. However, so long as photolithography is used, it is difficult to carry out the orientation process for a region of 1 µm² or smaller.

### DISCLOSURE OF INVENTION

An object of the present invention is to overcome the foregoing limitations of conventional techniques with use of a part having a sharp tip, and thereby provide a novel method of manufacturing a thin film whereby a structure only in an arbitrary small region of the film is controlled.

To this end, the present invention provides a novel micro fabrication technique invented in view of the foregoing technical background.

### Specifically, the invention provides:

(1) A method for manufacturing a thin film, comprising the step of applying a force, with a part having a sharp tip, onto an entire area or arbitrary region of a film during or after formation of the film, so as to control a structure of the film.
(2) A method for manufacturing a thin film, comprising the step of applying a force, with a part having a sharp tip, onto an entire area or arbitrary region of a film during or after formation of the film, with a temperature of the film maintained at or above a glass transition temperature of a amorphous region, so as to control a structure of the film.
(3) A method as set forth in (1) or (2), wherein the force applied on the film derives from only the part having a sharp tip.
(4) A method as set forth in (1) or (2), wherein the force applied on the film derives from the part having a sharp tip, and at least one of an electric force generated by application of an electric field and a magnetic force generated by application of a magnetic field.
(5) A method as set forth in any one of (1) through (4), wherein the thin film is formed on a substrate.
(6) A method as set forth in any one of (1) through (5), wherein the part having a sharp tip is a probe of an atomic force microscope.
(7) A method as set forth in any one of (1) through (6), wherein plural areas of the film are simultaneously processed with plural parts having sharp tips.
(8) A method for manufacturing a multi-layered film, in which a method of any one of (1) through (7) is carried out on all of or some of the layers of the multi-layered film.
(9) A thin film having a structure controlled by an applied force exerted on an entire area or arbitrary region of the film by a part having a sharp tip during or after formation of the film.
(10) The thin film as set forth in (9), wherein a crystalline structure of crystals constituting the film is controlled.
(11) A thin film as set forth in (9), wherein an orientation direction of crystals constituting the film is controlled.
(12) A thin film as set forth in (9), wherein an orientation direction of molecules in crystals is controlled.
(13) A thin film as set forth in (9), wherein the film includes crystals according to any two of or three of (10), (11), and (12).
(14) A thin film as set forth in (9), wherein the film includes at least two regions of crystals controlled according to at least one of (10) through (12).
(15) A thin film as set forth in any one of (9) through (14), wherein the film is formed on a substrate.
(16) A multi-layered film having a structure according to any one of (9) through (15) controlled by carrying out the method of any one of (1) through (8) on all of or some of the layers of the multi-layered film.

A technical aspect of the present invention will now be described in more detail. For convenience of explanation, a technique of the invention is described through the case where a common atomic force microscope is used. As used herein, "a part having a sharp tip" refers to a probe of the atomic force microscope, as an example. The present invention, however, is not limited in any way by the following description.

In scanning a surface of a thin film with an atomic force microscope, a probe of the microscope applies force on the thin film in two directions: perpendicular to the film plane, and along the scan direction of the probe. The magnitudes of these two components of force vary depending on the type of atomic force microscope used and the operating modes. The present invention provides a technique that uses such a force for controlling a structure of the thin film. Specifically, with a probe of an atomic force microscope, a thin film is scanned at an appropriate speed along the film plane while applying an appropriate magnitude of force perpendicular to the film surface, so that an appropriate magnitude of force is also applied along the direction of scan. With these forces, the technique achieves ordered orientation of microcrystals or molecules in the thin film, along the scan direction of the probe.

In orienting microcrystals or molecules using a probe of a common atomic force microscope, the present invention can control a structure of a thin film with a thickness of 1000 nm or less. Further, a structure of the thin film can be controlled in a small region of a unit area as small as 1 nm². As for larger areas, a single scan of a probe can only cover an area up to 10⁴ µm². However, an area larger than several mm² can be controlled by carrying out a number of scans, or multiple scans at one time using a plurality of probes. Further, in an area covered by a single scan, the distance between controlled regions or positions of controlled regions can be determined with accuracy within 10 nm. Further, the present invention can control a film structure not only for a thin film with a thickness of 1000 nm of less but also for a thin film exceeding 1000 nm, or even a thin film exceeding 10 µm. Further, the process according to the present invention is not just limited to two-dimensional structures, but three-dimensional structures can also be controlled according to a method described below. First, a single-layer thin film is formed on a substrate by a means to be described later. After a structure of the film is controlled by the technique of the present invention, another single-layer thin film is formed on the first thin film and a structure of the second film is controlled with the technique of the present invention. By repeating this procedure, three-dimensional structures can be controlled as well. Note that, in this case, the stacked thin films may be made of the same material or different materials. Further, each thin film can have any thickness.

As described above, with the ordered orientation of molecules or microcrystals, it is possible to control the optical, dielectric, or mechanical properties of the thin film, and thereby render anisotropy to these properties. Further, with the technique of the present invention, a plurality of small regions can be formed in a single thin film as described above, and the optical, dielectric, or mechanical property in these regions of the film can be independently controlled.

With an atomic force microscope, the technique enables molecules or microcrystals to be orderly oriented along a direction of scan in a small region of an arbitrary size arbitrarily positioned in the thin film. A single thin film may include a plurality of small regions. Further, since the atomic force microscope can scan in any direction, the molecules or microcrystals in each small region can be independently oriented in desired directions. Thus, with the technique of the present invention, a plurality of small functional regions can be formed in a single thin film, and properties of these regions can be independently controlled. The technique of the present invention therefore enables a single thin film to integrate a plurality of small regions having different optical, dielectric, or mechanical properties.

The technique of the present invention can control a structure of a thin film made of an organic material or inorganic material.

An example of inorganic materials suitable for the invention is metal thin film and ceramic thin film with metal or metal oxide. However, the invention is not limited to these materials, and a thin film made of other materials can be used as well.

In order to form a thin film made of an inorganic material, common deposition methods can be used, including, for example, a dry deposition method in which a thin film is directly vapor-deposited or sputtered on a substrate. In the case of ceramic materials, a wet deposition method such as a sol-gel method can be also used.

When non-crystalline materials are used, a resulting film is in a so-called amorphous state. In some crystalline materials, a resulting film is structured from a large number of microcrystals. In other cases, microcrystals are interspersed in a amorphous state. The technique of the present invention is applicable regardless of the state of the film.

As for organic materials, the thin film may be made of a polymer, oligomer, or low-molecular-weight material.

The technique of the present invention can be used to control structures of various polymeric materials, examples of which include: thermoplastic polymers such as polyethylene or polypropylene; polyolefin resins such as 4-methylpentene-1 resin or polybutene-1 resin; polyvinyl alcohols; a copolymer of ethylene and vinyl alcohol; a copolymer of ethylene and vinyl acetate; polyacrylonitrile; polybutadiene; polyisoprene; polyamide resins; polyester resins such as polyethylene terephthalate or polybutyleneterephthalate; fluorinated resins as represented by polytetrafluoroethylene, polytrifluoroethylene (PTrFE), polyvinylidenefluoride (PVDF) or copolymers of polytrifluoroethylene and polyvinylidenefluoride (P(VDF-TrFE)). All of these materials are representative examples of crystalline thermoplastic resins. Examples of non-crystalline thermoplastic resins include: polyvinyl chloride; polyvinylidene chloride; polyacrylate; polymethacrylate; polycarbonate; and polystyrene.

The technique of the present invention can also be used to control a structure of a thermosetting polymer, examples of which include: a phenol resin; a urea resin; a melamine resin; an alkyd resin; an acrylic resin; an epoxy resin; and a silicon resin. When a thermosetting resin is used, a structure of the film is controlled before the deposited film is cured. By subsequent heat curing, a polymer film with highly ordered molecular orientation can be obtained.

The technique of the present invention can also be used to control a structure of a heat-resistant resin, examples of which include: polyimide resin or aromatic polyamide known as a aramid resin; polyphenylene ether; polyphenylene sulfide; polyarylate; poly-p-phenylene; poly-p-xylene; poly-p-phenylenevinylene; and polyquinoline.

Examples of conductive polymers include: polypyrrole; polythiophene; polyaniline; polyarylenevinylene; polythienylenevinylene; polyacen; polyacetylene; polyphenylene diamine; polyaminophenol; polyvinylcarbazole; polymer viologen; polyion complex; a charge transfer complex such as TTF-TCNQ; and derivatives of these compounds. The present invention can also be used for controlling a structure of a thin film made of conductive polymer materials as exemplified above.

With a controlled structure, the conductive polymer material can be used in a wide range of fields, such as an emission source of an electroluminescence element (EL); a counter conductive film for a touch panel; various parts of displays including a liquid crystal display (LCD), plasma display panel (PDP), field emission display (FED), touch panel, electrochromic element, and cathode-ray tube (CRT); and recording media such as optic recording media, magneto-optic recording media, phase change recording media and magnetic recording media. The present invention is therefore highly useful in many industrial applications.

The foregoing materials are just some of representative examples of thermoplastic resins, thermosetting resins, heat-resistant resins, and conductive organic polymers. As such, the invention is not just limited to these examples and is applicable to various other polymer materials.

Further, the technique of the present invention is also applicable to a thin film made of a liquid crystal material, such as polymer liquid crystal, oligomer liquid crystal, and low-molecular-weight liquid crystal. The liquid crystal material may be thermotropic or lyotropic. As a thermotropic liquid crystal, any of nematic liquid crystal, smectic liquid crystal, and cholesteric liquid crystal can be used. Further, in the case of polymer liquid crystal or oligomer liquid crystal, the technique of the present invention is applicable to either of two types of these liquid crystals: a backbone-type in which a rigid aromatic cyclic mesogen group is attached to the backbone; and a side chain-type in which the mesogen group is attached to the side chains. When a thin film of backbone-type liquid crystal is used in particular, a highly anisotropic film can be obtained with respect to rigidity or other physical properties of the liquid crystal along the backbone direction and side chain direction. This enables micro functional elements such as a nanoactuator to be formed in the thin film.

As noted above, a method of forming an organic thin film is not particularly limited. For example, a solution dissolving an organic film material may be spread over a substrate with the use of an applicator such as a spinner, bar coater, or slit die, followed by evaporation of the solvent. Alternatively, a wet deposition method such as spray coating or dipping may be used. Further, the organic material may be directly deposited on a substrate by a dry deposition method such as sputtering, CVD, or PVD. Optionally, the film may be etched or patterned, or a thin film of a different material may be stacked on the film.

When non-crystalline materials are used, a resulting film is in a so-called amorphous state. In some crystalline materials, a resulting film is structured from a large number of microcrystals. In other cases, microcrystals are interspersed in a amorphous state. The technique of the present invention is applicable regardless of the state of the film.

As described above, the present invention varies the micro-structure of the film by scanning a surface of a film with a probe of an atomic force microscope, applying the force on the film in a direction of thickness and a direction of scan. When non-crystalline materials are used, the force orients the molecules along the scan direction of the probe. On the other hand, in the case of crystalline materials, three different orientation types result. In the first type, the molecules are oriented along the direction of scan, as in non-crystalline materials. In this case, the crystal structure of new crystals formed by re-orientation of the molecules remains the same, and only their direction is changed. The second orientation type results when the film is polycrystalline. In this case, the scan made by the atomic force microscope rotates each crystal so that the crystals are aligned along the scan direction without changing the molecular chains in the crystals. As in the first type, the crystal structure does not change. In the case of polycrystals, a preferable orientation type is determined by the condition which allows for more mobility between molecules in the crystals and microcrystals. When the energy required to move the crystals is lower than that required to move the molecules in the crystals, each microcrystal can be rotated and oriented along the scan direction even when the scan made by the probe of the atomic force microscope is carried out at a low temperature. In this case, the molecules in the crystals can be re-oriented along the scan direction by carrying out the scan at a higher temperature. By the re-orientation of the molecules, the crystals disappear after the scan. In the third orientation type, a scan made by the atomic force microscope orients the molecular chains in the crystals along the scan direction, with the result that the crystal structure is changed after the scan.

In order to orient the molecules or microcrystals of the film along the scan direction by the force of the probe of the atomic force microscope, a sufficient energy is required to allow for movement of the molecules or microcrystals. One effective means to assist the movement is to increase the film temperature above room temperature. When non-crystalline materials are used, it is effective to heat the film to a temperature at which the molecules start to undergo thermal motion, i.e., at or above the glass transition temperature (Tg). On the other hand, in the case of crystalline materials, the microcrystals, as well as the molecular chains, can be oriented along the scan direction. In this case, the scan made by the probe should avoid molecule movement in the crystals. It is therefore preferable that the scan be carried out at a lower temperature than that for orienting the molecules. Specifically, the scan can be effectively carried out at a temperature no less than glass transition temperature of a amorphous region between microcrystals, and at a temperature sufficiently below melting point (Tm) of the crystals. On the other hand, the molecules in the crystalline regions can be effectively oriented by heating the film to a temperature in the vicinity of melting point of the crystals.

When the molecules forming the film contain polar groups such as an amino group, ammonium group, or hydroxyl group, or halogen elements such as F or Cl, an electric field can be effectively applied to the film in order to facilitate movement of the molecules or microcrystals by the probe scan. For example, many low-molecular-weight liquid crystals are anisotropic with respect to dielectric constant along the short axis and that along the long axis. It is therefore possible to assist alignment effectively by applying of an electric field. The effect of applying an electric field is particularly notable in ferroelectric materials, in which the direction of spontaneous polarization in the film is reversed when an electric field at or greater than the coercive electric field (Ec) is applied.

For organic ferroelectric materials, it is particularly effective to apply an electric field during a probe scan. Examples of organic ferroelectric materials include: vinylidenefluoride polymers (PVDF); vinylidenefluoride oligomers; vinylidenefluoride copolymers as represented by a random copolymer of vinylidenefluoride and polytrifluoroethylene (P(VDF-TrFE)); odd-numbered nylon resins such as nylon 7, nylon 9, nylon 11, or nylon 13; and alternating copolymers of vinylidenecyanide and vinyl acetate. In liquid crystal materials, the effect of applying an electric field is particularly notable in ferroelectric liquid crystals as represented by a cholesteric liquid crystal having chiral C*. All of the organic ferroelectric liquid crystals as exemplified above are order-disorder type ferroelectric materials. As for inorganic ferroelectric materials, it is highly effective to apply an electric field during a probe scan to the inorganic crystals of an order-disorder type ferroelectric material such as potassium hydrogen phosphate, Rochelle salt, glycine sulfate, sodium nitrate, or thiourea. In the case of inorganic displacement-type ferroelectric materials, it is effective to apply an electric field to a ceramic ferroelectric including, for example, barium titanate crystals, zirconium titanate, and lead titanate. It is to be noted that application of an electric field is effective not only for the foregoing ferroelectric materials but also for all kinds of ferroelectric materials in general.

The application of an electric field is effective regardless of whether the applied field is a DC electric field or AC electric field. The effect can be obtained when the magnitude of the applied electric field is 0 V or greater, but an even greater effect can be obtained for ferroelectric materials when an electric field equal to or greater than the coercive electric field (Ec) is applied. Likewise, in the case of an AC electric field, a greater effect can be obtained when the peak value is equal to or greater than the coercive electric field (Ec). An electric field perpendicular to the film can be generated by applying a voltage across the probe of the atomic force microscope and a conductive substrate on which the film is formed. An electric field parallel to the film plane can be generated by applying a voltage across the probe and one or more independent electrodes formed on the film surface, or by applying a voltage across two or more independent probes provided in the atomic force microscope. In these cases, the probe or probes of the atomic force microscope need to be conductive. Such a conductive probe can be obtained by depositing a highly conductive metal such as Au, Pt, Ag, or Rh on a surface of a silicon stylus having a sharp tip, or by doping a silicon material of a stylus with a large amount of impurities such as P.

Note that, the ferroelectric thin film can be used in speakers, microphones, ultrasonic transducers, pressure sensors, optical switches, capacitors, optical memory, ferroelectric memory, optical waveguides, surface wave filters, infrared detectors, and light modulating devices, for example. The performance of these devices can be improved by using the ferroelectric thin film whose structure is controlled by a method of the present invention.

When the molecules of the film have a magnetic dipole, it is effective to apply a magnetic filed to the film in order to facilitate movement of the molecules or microcrystals by the probe scan. Application of a magnetic field is particularly effective in ferromagnetic materials, because the direction of magnetization in ferromagnetic film is reversed by applying coercive magnetic field. One method to assist alignment by applying a magnetic field to the film is using a magnetic probe. Specifically, this can be achieved with a probe whose tip has been coated by sputtering with a magnetic metal such as Fe, Ni, or Co, or a compound containing these metals and magnetized by applying magnetic field. With this method, the film experiences the magnetic field at all times. Alternatively, the tip of the probe and a nearby region of the film may be magnetized by flowing a current through a magnetic coil provided in the vicinity of the probe tip. In this case, the magnetic field can be turned ON or OFF depending on purpose.

In organic materials, the n electrons of the benzene ring easily form a magnetic dipole. Therefore, for rigid molecules containing a large number of benzene rings, it is effective to apply a magnetic field during a probe scan. This is particularly effective for heat-resistant polymers as exemplified above, namely, aromatic polyamide, polyphenylene ether, polyphenylene sulfide, polyarylate, poly-p-phenylene, poly-p-xylene, poly-p-phenylenevinylene, and polyquinoline, which are some of the examples of rigid molecules containing a large number of benzene rings. As for liquid crystal materials, many of them contain aromatic rings, which render rigidity to the structure. Therefore, application of a magnetic field is effective for both polymer liquid crystals and low-molecular-weight liquid crystals. Application of a magnetic field is also effective for inorganic magnetic materials, particularly ferromagnetic materials containing metals such as Fe, Ni, or Co, or their oxides or alloys of these metals. Further, in scanning the ferromagnetic material, it is highly effective to apply a magnetic field equal to or greater than the coercive magnetic field, as in the case of the ferroelectric material in which an electric field equal to or greater than the coercive electric field can be effectively applied.

A substrate used for supporting a thin film manufactured by a method of the present invention is not particularly limited. The material, shape, structure, size, and other properties of the substrate can be suitably selected according to the intended use or required functions. For example, a functional substrate may be a transparent substrate, light-shielding substrate, a conductive substrate, semiconductive substrate, insulating substrate, or gas barrier substrate. Specific examples of such functional substrates include: a glass substrate, a ceramic substrate, an organic or inorganic semiconductor substrate, a graphite substrate, an organic conductive substrate, a metal substrate, and a resin film.

In using the atomic force microscope, the operation mode of scanning the film surface may be either a dynamic-mode in which the probe is not in direct contact with the film surface or is in contact with the film surface only intermittently, or a contact-mode in which the probe is in contact with the film surface at all times. Of these two operation modes, the contact-mode allows the force to be applied perpendicular to the film and along the scan direction, and therefore has more effect on the film. In the dynamic-mode, the force perpendicularly applied on the film by the probe is intermittent, and the magnitude of force in the scan direction is small. The dynamic-mode or contact-mode needs to be suitably selected taking into consideration the toughness of the material used and the mobility of the molecules in the film. In the case of organic materials, the contract-mode is generally more suitable because the polymer material generally has good toughness and restricted mobility. The dynamic-mode is suitable for some low-molecular-weight materials.

In operating the probe in the contact-mode or dynamic-mode, the hardness of the cantilever (a support for the probe) has a profound effect on the resulting orientation of the molecules or microcrystals constituting the film. The extent of damage on the film is also largely dependent on the hardness of the cantilever. When the film is made of a soft material, an exceptionally soft cantilever needs to be used to prevent damage on the film. Even for a polymer film, a soft cantilever is required when a scan is made at a high temperature in the vicinity of the melting point. Specifically, for organic materials, a cantilever with a spring constant of no greater than 40 N/m is preferable in the dynamic-mode, and a cantilever with a spring constant of no greater than 4 N/m is preferable in the contact-mode. Further a cantilever with a spring constant of no greater than 0.4 N/m is more preferable in the contact-mode. For inorganic materials, the hardness of the cantilever is not so restricted, but a cantilever with a spring constant of no greater than 40 N/m can be preferably used.

When the film is made of polymer, scanning the film with a probe controls the orientation of the molecular chains along the scan direction in the case of non-crystalline polymers. Generally, the film temperature during a scan should preferably be maintained at or above the glass transition temperature. However, the optimum film temperature that provides the most preferable orientation varies depending on the material of the film. Usually, the most preferable temperature is determined by the temperature characteristics concerning film toughness and mobility of the molecules. Further, when the film is structured from a large number of microcrystals of a crystalline polymer, it is generally preferable to scan the film at a temperature range from the temperature at or above the glass transition temperature of a amorphous region of the film to the temperature sufficiently below the melting point of the crystal region. However, as in the case of the non-crystalline polymer, the optimum temperature that provides the most preferable orientation varies depending on the material of the film. By scanning the film at the optimum temperature of the material used, the microcrystals can be desirably oriented. In above case, however, it is often difficult to orient the microcrystals using dynamic-mode. It is therefore more preferable to carry out the operation in the contact-mode. Further, by scanning the film at a temperature in the vicinity of the melting point of the crystal region of the crystalline polymer, the molecular chains can be oriented in the scan direction.

The foregoing described the technique of the present invention based on an example in which a part having a sharp tip is a probe of an atomic force microscope. However, the device used in the present invention is not just limited to the atomic force microscope, and the invention is applicable to various other devices as exemplified below. For example, as a manufacturing device or processing device for a thin film according to the present invention, the invention can use any device as long as it has a part having a sharp tip, and has a mechanism that enables the sharp tip to apply force on the film and scan the film along the film plane. Such manufacturing devices or processing devices have basic structures similar to that of the atomic force microscope, but do not necessarily have the feedback function of the atomic force microscope. Further, the present invention can also use devices that additionally include a mechanism for controlling the magnitude of force applied on the film through the sharp tip. Further, the invention can also use a device designed to include more than one part having a sharp tip and thereby allows the process to be quickly carried out over a large area. As for the horizontal scan, the scan can be made not only by moving the probe but also by moving the thin film being processed.

### BRIEF DESCRIPTION OF DRAWINGS

Fig. 1 is an atomic force micrograph of a thin film surface (area: 10 µm × 10 µm), prior to a scan for the orientation control by an atomic force microscope, according to Example 1 of the present invention.
Fig. 2 is a schematic illustration of crystals and molecules on a thin film on graphite, before and after the film is scanned for the orientation control at a temperature of 50°C or higher, according to Example 1 of the present invention.
Fig. 3 is an atomic force micrograph of a thin film surface on graphite (area: 2 µm × 2 µm), before and after the film is scanned for the orientation control at a temperature of 80°C, according to Example 1 of the present invention.
Fig. 4 is an atomic force micrograph of a thin film surface (area: 4 µm × 4 µm), before and after the thin film is scanned with an applied voltage, according to Example 2 of the present invention.
Fig. 5 is a schematic illustration of crystals and molecules on a thin film on graphite, before and after the film is scanned for the orientation control at 135°C by using a probe of an atomic force microscope, according to Example 3 of the present invention.
Fig. 6 is an atomic force micrograph of a thin film surface on graphite (area: 1 µm × 1 µm), before and after the film is scanned for the orientation control at 135°C by using a probe of an atomic force microscope, according to Example 3 of the present invention.
Fig. 7 is an atomic force micrograph of a thin film surface (area: 1 µm × 1 µm) formed on a glass substrate, according to Example 4 of the present invention.
Fig. 8 is a schematic view illustration of crystals of the thin film shown in Fig. 7.
Fig. 9 is a schematic illustrating how molecules are oriented along a scan direction by a scan using a probe on the thin films formed on a glass substrate, on a Pt layer, on an Au layer, or on an Al layer, according to Examples 4 through 7 of the present invention.
Fig. 10 is an atomic force micrograph of a thin film surface on glass (area: 2 µm × 2 µm), before and after the film is scanned for orientation control by using a probe of an atomic force microscope, according to Example 4 of the present invention.
Fig. 11 is an atomic force micrograph of a surface of a thin film formed on a Pt layer (area: 2 µm × 2 µm), according to Example 5 of the present invention.
Fig. 12 is an atomic force micrograph of a thin film surface on Pt layer (area: 2 µm × 2 µm), before and after the film is scanned for orientation control, according to Example 5 of the present invention.
Fig. 13 is an atomic force micrograph of a surface of a thin film formed on an Al layer (area: 2 µm × 2 µm), according to Example 6 of the present invention.
Fig. 14 is an atomic force micrograph of the thin film surface on Al layer (area: 2 µm × 2 µm), before and after the thin film formed on the Al layer is scanned, according to Example 6 of the present invention.
Fig. 15 is an atomic force micrograph of a surface of a thin film formed on an Au layer (area: 2 µm × 2 µm), according to Example 7 of the present invention.
Fig. 16 is an atomic force micrograph of the thin film surface on Au layer (area: 2 µm × 2 µm), before and after the film is scanned for orientation control, according to Example 7 of the present invention.

### BEST MODE FOR CARRYING OUT THE INVENTION

A specific embodiment and effects of the present invention will be described below by way of Examples. It should be understood, however, that the invention is not limited in any way by the materials, devices, or experimental conditions used in the following Examples, but on the contrary, the invention is to cover all modifications, equivalents, and alternatives falling within the scope of the invention as defined in the specification and appended claims.

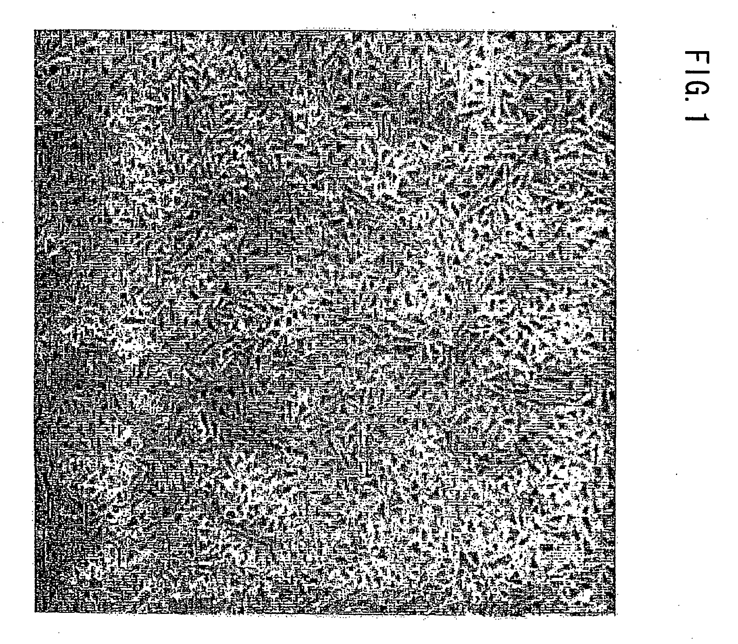

In Example 1, 30 mg of a random copolymer of vinylidenefluoride and trifluoroethylene (P(VDF-TrFE)) (VDF/TrFE ratio: 68 to 80/32 to 20), which is ferroelectric polymer, was dissolved in 10 ml of methylethylketone (MEK), so as to prepare a P(VDF-TrFE) solution. The solution was spin-coated on a graphite substrate used as a conductive substrate. The resulting thin film was then subjected to a heat treatment for one hour at 140°C, so as to obtain a ferroelectric lamellar microcrystalline thin film of 25 nm thick. The film had a glass transition temperature of -25°C, and a melting point in the vicinity of 150°C. The lamellar microcrystals had c axes (molecular chain axes) isotropically oriented in the film plane. Fig. 1 depicts surface topography of the film observed with an atomic force microscope.

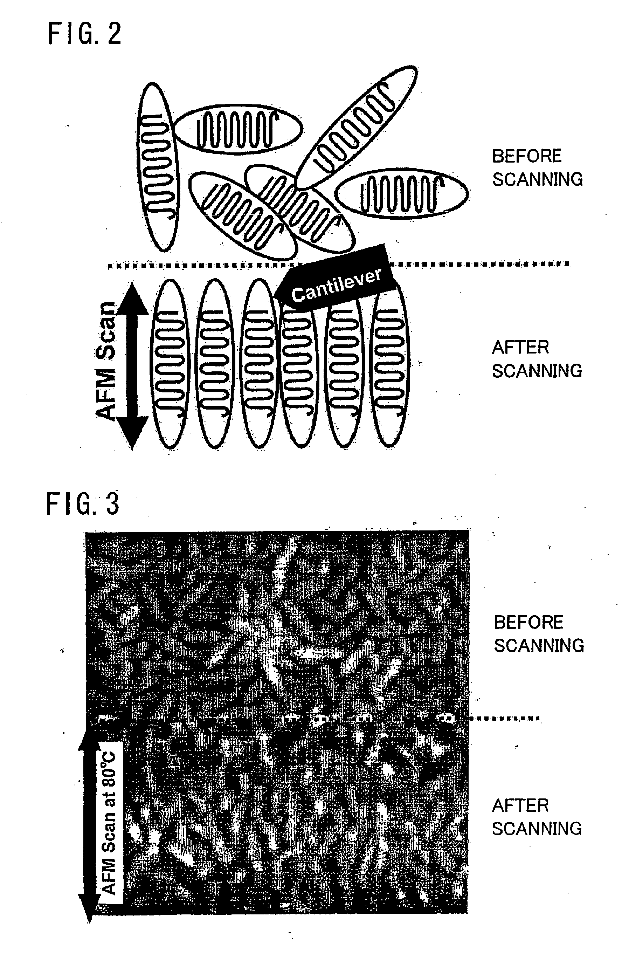

A surface of the film heated at 50°C or higher was scanned in contact-mode using the atomic force microscope. As a result, the lengthwise direction of the lamellar microcrystals oriented along the direction of the scan. Figure 2 schematizes how the crystals are oriented by the scan for orientation control using a probe of atomic force microscope.

The regularity of orientation was improved by the scan with a rise in the film temperature, whereas a higher film temperature caused more damage on the film surface during a scan. The extent of damage on the film surface caused by the probe scan varied depending on the spring constant of the cantilever. By using such parameters as film temperature, spring constant of the cantilever, and probe pressure, orientation of lamellar crystals was studied extensively. It was found as a result that the lamellar crystals was oriented when the film was scanned with a probe at the film temperature of 80°C, which is higher than 50°C, using a soft silicon cantilever having a spring constant of 0.2 N/m. Figure 3 depicts an atomic force micrograph of the film surface scanned for the orientation control under these conditions (observed at 30°C). In Fig. 3, the lower half shows an image after the scan for the orientation control. As clearly indicated in Fig. 3, the lamellar crystals are desirably oriented along the scan direction. By thus suitably setting the spring constant of the cantilever and the film temperature, microcrystals were oriented along the scan direction of the probe using an atomic force microscope.

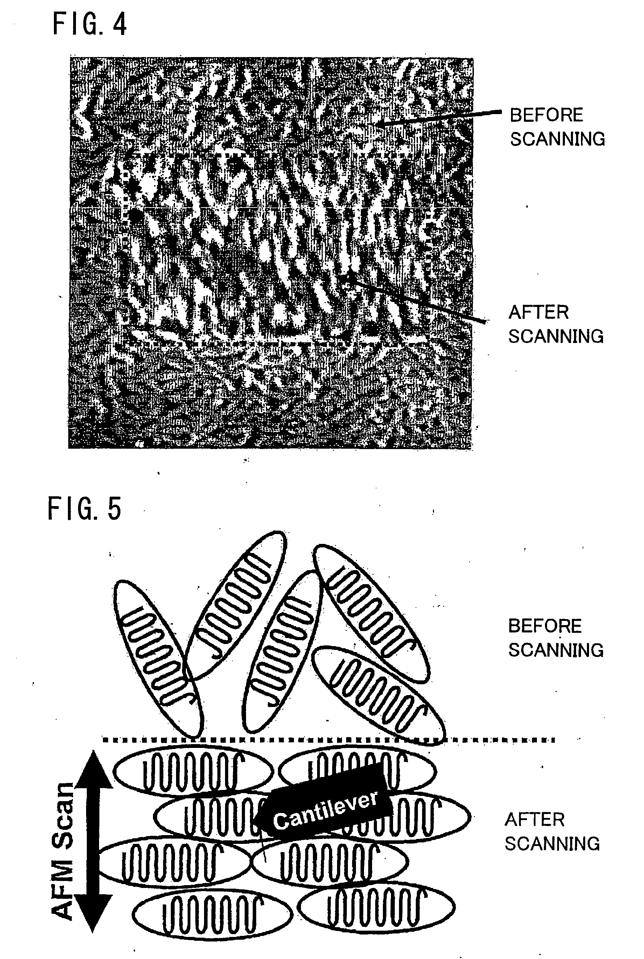

In Example 2, 50 mg of a random copolymer of vinylidenefluoride and trifluoroethylene (P(VDF-TrFE)) (VDF/TrFE ratio: 68 to 80/32 to 20) used in Example 1 was dissolved in 10 ml of methylethylketone (MEK), so as to prepare a P(VDF-TrFE) solution. As in Example 1, the solution was spin-coated on a graphite substrate. The resulting thin film was then subjected to a heat treatment for one hour at 140°C, so as to obtain a ferroelectric lamellar microcrystalline thin film of 75 nm thick. The film was heated at 80°C, and was scanned for the orientation control in contact-mode using an atomic force microscope with an applied voltage of 7 V, which is equal to or higher than the coercive electric field of the film, across the cantilever and the conductive substrate bearing the film. Here, the scan for the orientation control was made with a conductive cantilever, which additionally had a metal coating on the cantilever used in Example 1 (silicon cantilever with a spring constant of 0.2 N/m). Figure 4 depicts the result obtained by the scan in the presence of an electric field. In Fig. 4, the central portion corresponds to a region scanned for the orientation control in the presence of an electric field. It can be seen that the lamellar crystals are more desirably oriented in this region along the scan direction, as compared with the result shown in Fig. 3 (Example 1). In ferroelectric polymers, the improved orientation obtained in the presence of an electric field can be attributed to helical deformation of the C-C backbone caused by the rotation of a H-F permanent dipole around the C-C backbone, and the corresponding slight deformation of the crystals, which affords more crystal mobility.

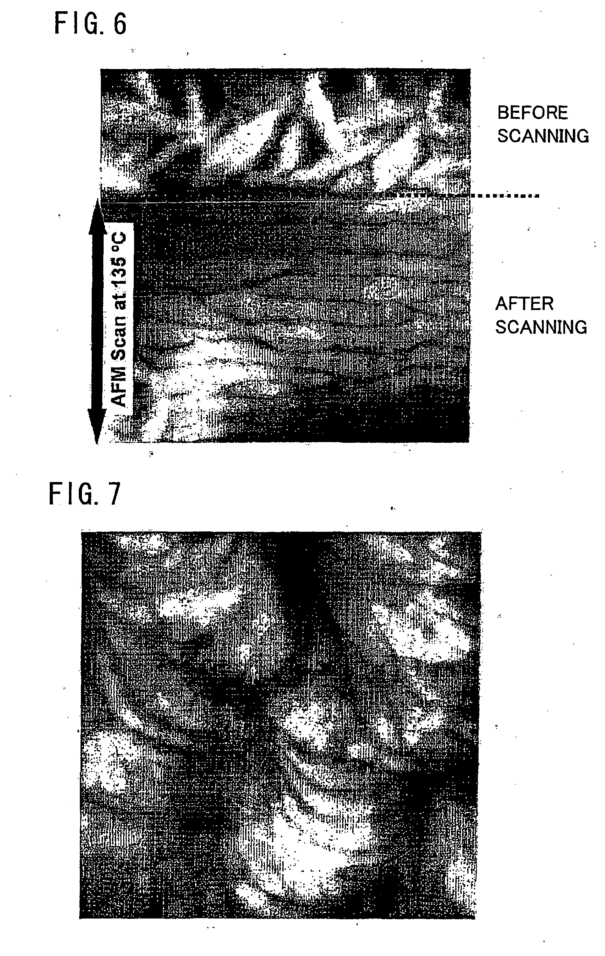

In Example 3, a surface of the p(VDF-TrFE) film (thickness of 75 nm) used in Example 2 was scanned for the orientation control at 135°C, which is higher than 80°C, using the cantilever used in Example 1. Here, the scan was made in the absence of a voltage across the probe and substrate. As a result, the lamellar crystals aligned with the lengthwise direction perpendicular to the scan direction, appeared as shown in Fig. 5. This is the result of increased mobility of the molecular chains afforded by the increased temperature much higher than suitable temperature 80°C, used in Example 1, for the orientation control of the P(VDF-TrFE) microcrystals. Thus, scanning the film surface at 135°C with the probe of the atomic force microscope controls the molecular chains orientation, not the orientation of lamellar crystals, along the scan direction, thereby forming new lamellar crystals oriented perpendicular to the scan direction. Figure 6 depicts an atomic force micrograph of the film surface obtained by the scan for orientation control under these conditions.

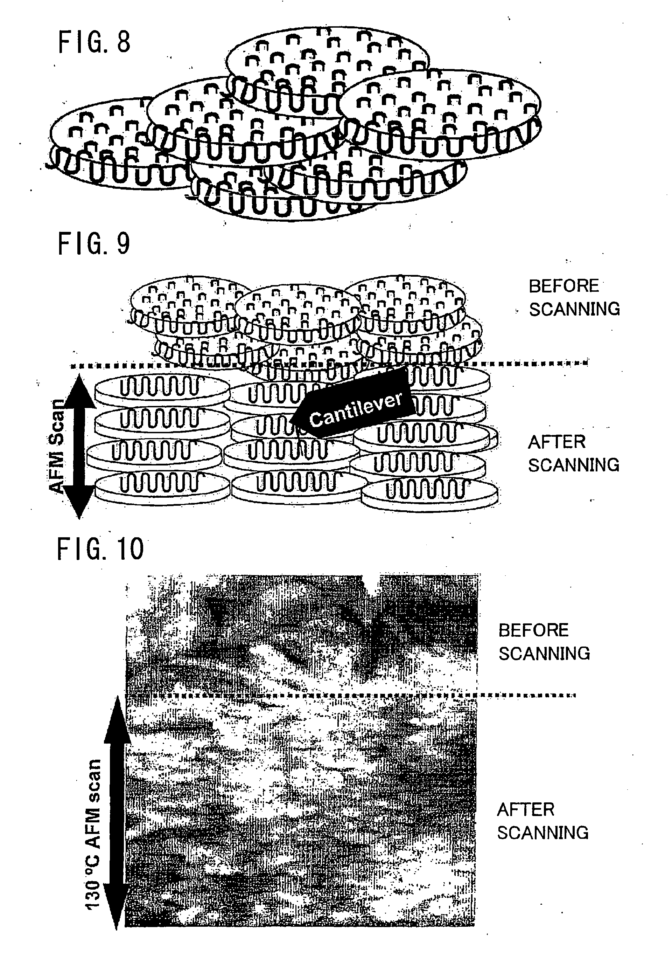

In Example 4, a P(VDF-TrFE) thin film of 75 nm thick was formed on a glass substrate (MATSUNAMI MICRO COVER GLASS) according to the procedure of Example 1. Figure 7 depicts an atomic force micrograph of the resulting film surface (observed at 30°C). It can be seen from Fig. 7 that the P(VDF-TrFE) on the glass substrate is composed of lamellar crystals whose lamellar planes are grown parallel to the in-plane direction of the substrate. Figure 8 schematizes the P(VDF-TrFE) crystals shown in Fig. 7. As clearly shown in Fig. 8, the P(VDF-TrFE) molecular chains in the crystals formed on the glass substrate are oriented perpendicular to the substrate, as compared with Example 3 in which the P(VDF-TrFE) molecular chains in the crystals formed on the graphite substrate were oriented parallel to the in-plane direction of the substrate.

The thin film heated to 130°C was scanned in the direction of arrow shown in Fig. 9, using the cantilever of Example 1. Figure 10 depicts a resulting atomic force micrograph (observed at 30°C). It can be seen from Fig. 10 that, in a region scanned at 130°C, lamellar crystals whose lamellar plane are grown perpendicular to the substrate are formed. Further, as in Example 3, the crystals were oriented so that their long axes were perpendicular to the direction of the scan carried out at 130°C. These results clearly indicate that the lamellar crystals with the orientation perpendicular to the scan direction were formed as a result of a change in the orientation state of the molecular chains, from the perpendicular state with respect to the in-plane direction of the substrate to the orientation along the scan direction, caused by an applied force exerted on the molecular chains at 130°C by the probe scan, as schematically illustrated in Fig. 9. Thus, with the technique of the present invention, the molecular chains perpendicular to the substrate can be oriented along the in-plane direction of the substrate and the scan direction of the probe.

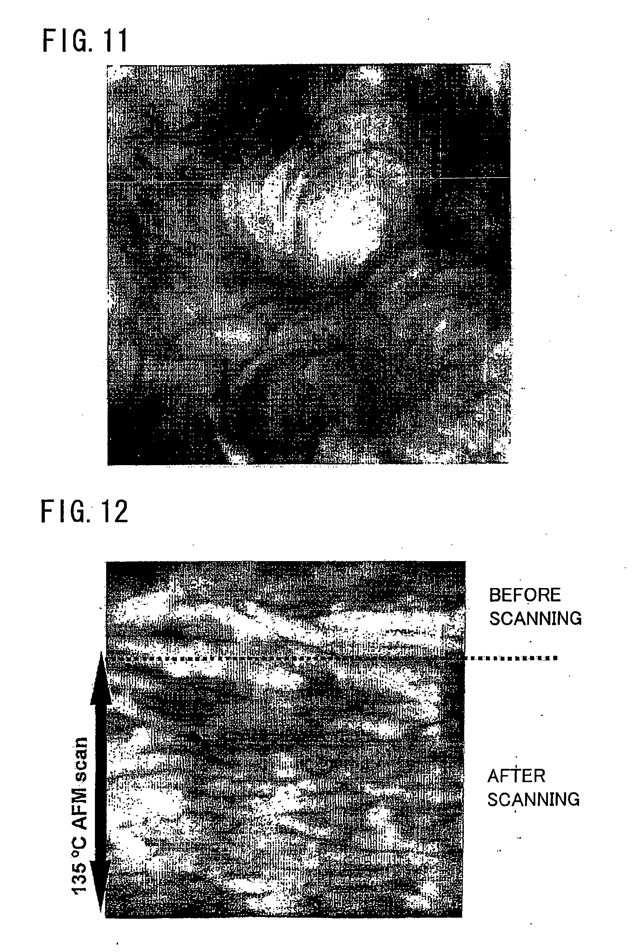

In Example 5, platinum (Pt) (50 nm thick) was sputtered on a Si wafer, so as to obtain a substrate coated with a Pt thin film. According to the procedure of Example 4, a P(VDF-TrFE) thin film (75 nm thick) was formed on the substrate. Figure 11 depicts an atomic force micrograph of the resulting thin film surface (observed at 30°C). It can be seen from Fig. 11 that the P(VDF-TrFE) on the Pt layer is composed of lamellar crystals whose lamellar planes are grown parallel to the substrate, as in Example 4. The thin film heated at 135°C was scanned for the orientation control in the direction of arrow shown in Fig. 9, using the cantilever of Example 1. Figure 12 depicts the resulting atomic force micrograph (observed at 30°C). As can be seen from Fig. 12, the lamellar crystals with the lengthwise orientation perpendicular to the scan direction were formed on the Pt layer as a result of a change in the orientation state of the molecular chains, from the perpendicular state with respect to the in-plane direction of the substrate to the orientation along the scan direction, caused by an applied force exerted on the molecular chains at 135°C by the probe scan, as in

### Example 4.

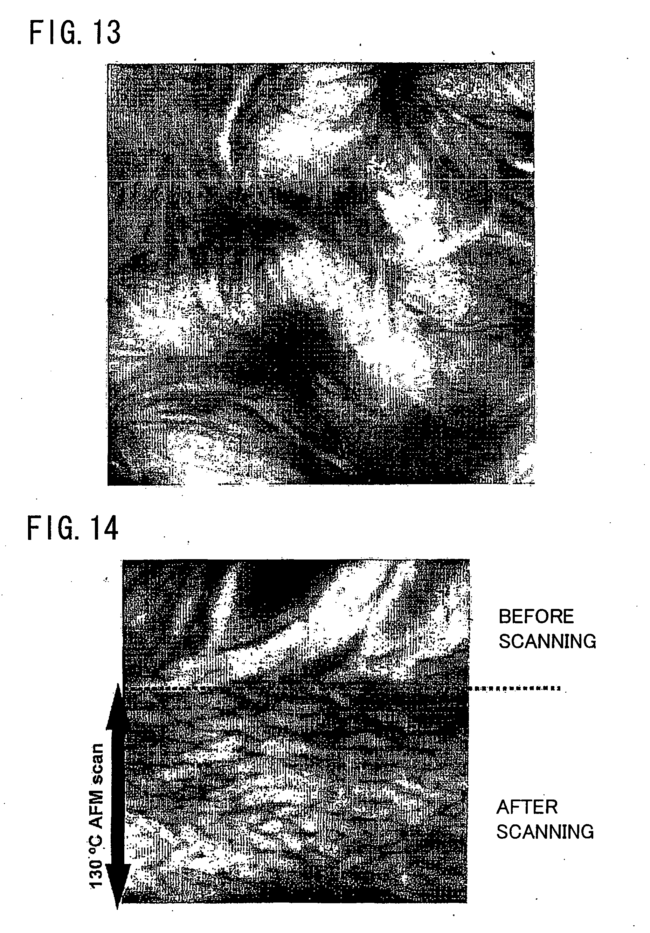

In Example 6, aluminum (Al) (50 nm thick) was vapor-deposited on a Si wafer, so as to obtain a substrate coated with an Al thin film. According to the procedure of Example 4, a P(VDF-TrFE) thin film (75 nm thick) was formed on the substrate. Figure 13 depicts an atomic force micrograph of the resulting thin film surface (observed at 30°C). It can be seen from Fig. 13 that the P(VDF-TrFE) on the Al layer is composed of lamellar crystals whose lamellar planes are grown parallel to the plane of the substrate, as in Example 4. The thin film heated at 130°C was scanned for the orientation control in the direction of arrow shown in Fig. 9, using the cantilever of Example 1. Figure 14 depicts the resulting atomic force micrograph (observed at 30°C). As can be seen from Fig. 14, the lamellar crystals with the lengthwise orientation perpendicular to the scan direction were formed on the Al layer as a result of a change in the orientation state of the molecular chains, from the perpendicular state with respect to the in-plane direction of the substrate to the orientation along the scan direction, caused by an applied force exerted on the molecular chains at 130°C by the probe scan, as in Example 4.

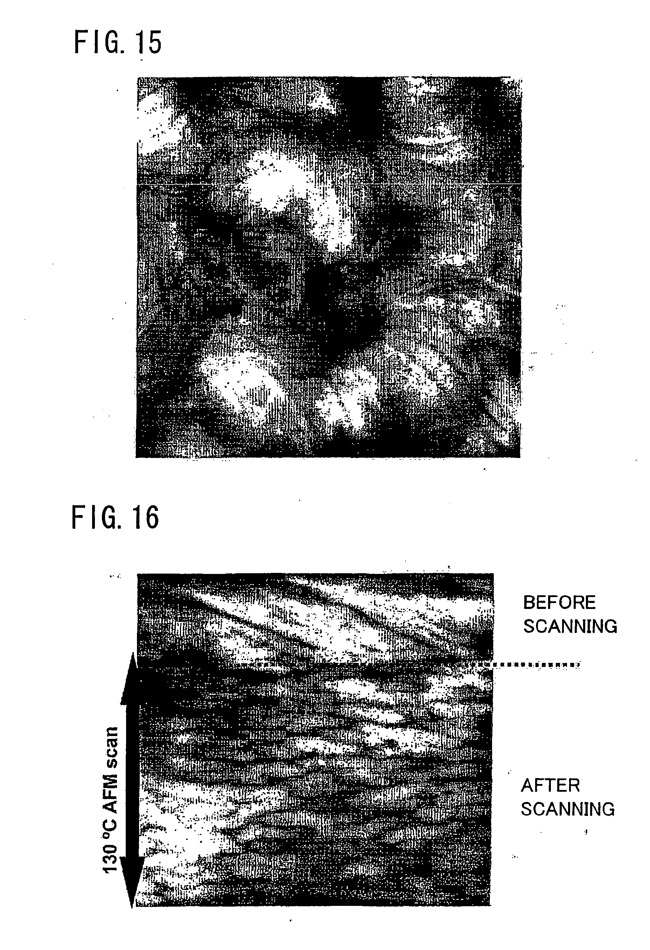

In Example 7, gold (Au) (50 nm thick) was vapor-deposited on a Si wafer, so as to form a substrate coated with a Au thin film. According to the procedure of Example 4, a P(VDF-TrFE) thin film (75 nm thick) was formed on the substrate. Figure 15 depicts an atomic force micrograph of the resulting thin film surface (observed at 30°C). It can be seen from Fig. 15 that the P(VDF-TrFE) on the Au layer is composed of lamellar crystals whose lamellar planes are grown parallel to the plane of the substrate, as in Example 4. The thin film heated at 130°C was scanned for the orientation control in the direction of arrow shown in Fig. 9, using the cantilever of Example 1. Figure 16 depicts the result obtained with the atomic force microscope (observed at 30°C). As can be seen from Fig. 16, the lamellar crystals with the lengthwise orientation perpendicular to the scan direction were formed on the Au layer as a result of a change in the orientation state of the molecular chains, from the perpendicular state with respect to the in-plane direction of the substrate to the orientation along the scan direction, caused by an applied force exerted on the molecular chains at 130°C by the probe scan, as in Example 4.

As can be seen from the results of the foregoing Examples, a method according to the present invention enables the molecules to be oriented in a specific direction with respect to a scan direction of the probe, irrespective of the initial spatial orientation of the molecules. Thus, with the technique of the present invention, limitations of conventional techniques can be overcome, and the molecules or microcrystals in any small region of the thin film can be oriented in an arbitrary direction to control the structure in the small region. As a result, various properties of the small region can be controlled, including optical, electrical, and mechanical properties such as refractive index, dielectric constant, and elastic modulus, respectively.

### INDUSTRIAL APPLICABILITY

The present invention can be used for controlling refractive index of a thin film in the fields of optical communications filter, display, and optical memory, for example. The invention is also useful in formation of various micro parts when mechanical constants such as elastic modulus are controlled. Further, by controlling a sound velocity, the invention is applicable to surface wave filters. When used for controlling a dielectric constant, the invention is applicable to micro circuit boards which incorporate various elements such as a capacitor. As set forth above, the present invention covers a wide range of field, including optical communications, electronic devices, and common machinery. When used in these and other fields, the invention can realize high-quality parts and devices unattainable by conventional techniques.

## Claims

1. A method for manufacturing a thin film, comprising the step of applying a force, with a part having a sharp tip, onto an entire area or arbitrary region of a film during or after formation of the film, so as to control a structure of the film.

2. A method for manufacturing a thin film, comprising the step of applying a force, with a part having a sharp tip, onto an entire area or arbitrary region of a film during or after formation of the film, with a temperature of the film maintained at or above a glass transition temperature of a amorphous region, so as to control a structure of the film.

3. A method as set forth in claim 1 or 2, wherein the force applied on the film derives from only the part having a sharp tip.

4. A method as set forth in claim 1 or 2, wherein the force applied on the film derives from the part having a sharp tip, and at least one of an electric force generated by application of an electric field and a magnetic force generated by application of a magnetic field.

5. A method as set forth in any one of claims 1 through 4, wherein the thin film is formed on a substrate.

6. A method as set forth in any one of claims 1 through 5, wherein the part having a sharp tip is an atomic force microscope.

7. A method as set forth in any one of claims 1 through 6, wherein plural areas of the film are simultaneously processed with plural parts having sharp tips.

8. A method for manufacturing a multi-layered film, in which a method of any one of claims 1 through 7 is carried out on all of or some of the layers of the multi-layered film.

9. A thin film having a structure controlled by a force applied on an entire area or arbitrary region of the film by a part having a sharp tip during or after formation of the film.

10. A thin film as set forth in claim 9, wherein a crystalline structure of crystals constituting the film is controlled.

11. A thin film as set forth in claim 9, wherein an orientation direction of crystals constituting the film is controlled.

12. A thin film as set forth in claim 9, wherein an orientation direction of molecules in crystals is controlled.

13. A thin film as set forth in claim 9, wherein the film includes crystals according to any two of or three of claims 10, 11, and 12.

14. A thin film as set forth in claim 9, wherein at least two regions of crystals constituting the film are controlled according to at least one of claims 10 through 12.

15. A thin film as set forth in any one of claims 9 through 14, wherein the film is formed on a substrate.

16. A multi-layered film having a structure according to any one of claims 9 through 15 controlled by carrying out the method of any one of claims 1 through 8 on all of or some of the layers of the multi-layered film.
